# FASCICULE DE BREVET EUROPEEN

(11) **EP 3 192 645 B1**
(45) Date de publication et mention de la délivrance du brevet: **06.06.2018**
(21) Numéro de dépôt: 17150779.1
(22) Date de dépôt: 10.01.2017
(51) Int. Cl.: B29D 11/00

(54) **PROCÉDÉ DE FABRICATION D'UN ÉCRAN MUNI DE MICROSTRUCTURES RÉTRORÉFLÉCHISSANTES**
HERSTELLUNGSVERFAHREN EINES BILDSCHIRMS, DER MIT RÜCKSTRAHLENDEN MIKROSTRUKTUREN AUSGESTATTET IST
METHOD FOR MANUFACTURING A SCREEN PROVIDED WITH RETROREFLECTIVE MICROSTRUCTURES

(30) Priorité: 12.01.2016 FR 1650226
(43) Date de publication de la demande: 19.07.2017
(73) Titulaire: COMMISSARIAT À L'ÉNERGIE ATOMIQUE ET AUX ÉNERGIES ALTERNATIVES, 75015 Paris (FR)
(72) Inventeur: MARTINEZ, Christophe, 38100 GRENOBLE (FR); AVENTURIER, Bernard, 38134 SAINT JOSEPH DE RIVIERE (FR)
(74) Mandataire: Cabinet Beaumont

(56) Documents cités:
- JP-A- 2011 191 404
- US-A1- 2004 004 765

## Description

### Domaine

La présente demande concerne le domaine des systèmes d'affichage d'images sur des surfaces transparentes telles que des parebrises de véhicules, notamment de véhicules automobiles. Elle vise plus particulièrement un écran muni de microstructures rétroréfléchissantes adapté à un tel système, un procédé de réalisation d'un tel écran, et un moule pour la réalisation d'un tel écran.

### Exposé de l'art antérieur

La demanderesse a récemment proposé, dans la demande de brevet français FR3020149 déposée le 16 avril 2014 ainsi que dans la demande de brevet internationale correspondante WO2015158999 déposée le 9 avril 2015, un système d'affichage d'une image sur un parebrise utilisant un écran partiellement transparent et partiellement rétroréfléchissant revêtant la face intérieure du parebrise.

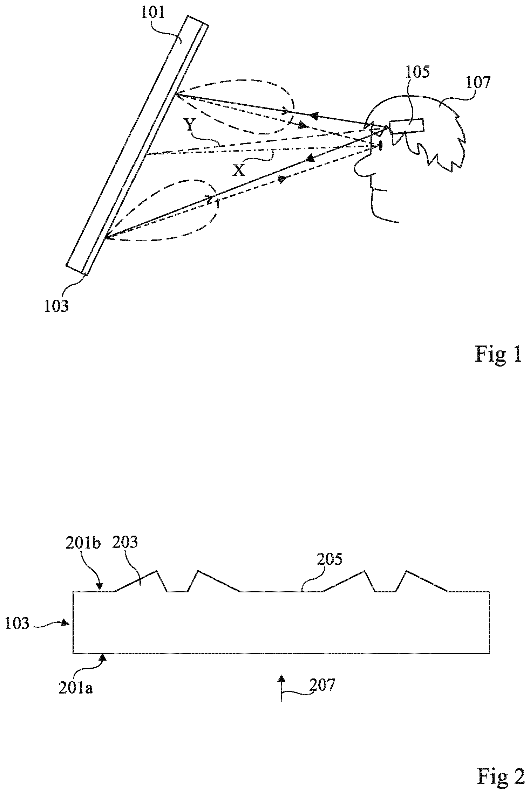

La figure 1 est une vue en coupe schématique d'un tel système. Ce système comprend un écran 103 revêtant la face intérieure d'un parebrise 101, c'est-à-dire sa face tournée vers l'intérieur du véhicule, et un projecteur 105 adapté à être monté sur la tête d'un utilisateur 107, par exemple le conducteur du véhicule. Le projecteur 105 est adapté à projeter une image sur tout ou partie de la surface de l'écran 103 tournée vers l'intérieur du véhicule (c'est-à-dire opposée au pare-brise 101). L'écran 103 est partiellement transparent et partiellement rétroréfléchissant. Plus particulièrement, l'écran 103 est adapté à rétroréfléchir - c'est-à-dire réfléchir en direction de sa source - de la lumière projetée sur sa face tournée vers l'intérieur du véhicule, et à laisser passer sans altération significative de la lumière provenant du pare-brise 101, c'est-à-dire de l'extérieur du véhicule. L'écran 103 a ainsi une fonction de transparence, permettant à l'utilisateur de voir la scène extérieure à travers le pare-brise 101 depuis l'intérieur du véhicule, et une fonction de rétroréflexion, permettant à l'utilisateur - dont les pupilles sont voisines du projecteur 105 - de voir, en superposition de la scène extérieure, une image produite par le projecteur 105.

La figure 2 est une vue en coupe représentant plus en détail l'écran 103 du système de la figure 1.

L'écran 103 est constitué d'un film en un matériau transparent dont une face 201a est approximativement lisse et dont une face 201b opposée à la face 201a présente des protubérances 203 sensiblement identiques régulièrement réparties sur la surface du film. Chaque protubérance 203 a sensiblement la forme d'un coin de cube, c'est-à-dire d'un trièdre comportant trois faces latérales triangulaires mutuellement perpendiculaires se rejoignant en un même point ou sommet, et, à l'opposé du sommet, une base, par exemple en forme de triangle équilatéral. Chaque protubérance 203 a son sommet pointant vers l'extérieur du film. Les bases des protubérances 203 sont parallèles à la face lisse 201a de l'écran, et l'axe central de chaque protubérance 203 (c'est-à-dire l'axe passant par le sommet du trièdre et par le centre de sa base) est orthogonal au plan moyen du film. Ainsi, les trois faces du trièdre sont obliques par rapport au plan moyen du film.

L'écran 103 se distingue d'un écran rétroréfléchissant à coins de cube traditionnel, en ce que, dans l'écran 103, les protubérances 203 ne sont pas adjacentes mais sont séparées les unes des autres par des zones sensiblement lisses 205 de la face 201b, parallèles ou approximativement parallèles à la face 201a de l'écran.

L'écran 103 est destiné à être éclairé par le projecteur 105 (figure 1) par sa face 201a, comme l'illustre schématiquement la flèche 207 de la figure 2. Les portions d'écran situées en regard des zones lisses 205 de la face 201a correspondent à des portions transparentes de l'écran 103, laissant passer la lumière dans les deux sens sans déformation significative. Les portions d'écran situées en regard des protubérances 203 correspondent quant à elles à des portions rétroréfléchissantes non transparentes de l'écran 103, adaptées à renvoyer en direction de sa source la lumière provenant du projecteur 105. Plus particulièrement, lorsqu'un faisceau lumineux incident (non représenté) atteint une portion rétroréfléchissante de l'écran 103, ce faisceau traverse une partie de l'épaisseur de l'écran jusqu'à atteindre la base du coin de cube 203 correspondant, pénètre dans le coin de cube, est réfléchi sur chacune des trois faces latérales du coin de cube, et, après réflexion sur la troisième face latérale, repart en direction de sa source. Dans l'exemple représenté, les réflexions sur les faces latérales des coins de cube sont basées sur le principe de la réflexion totale interne. A titre de variante, les faces latérales des coins de cube peuvent être recouvertes d'un matériau réfléchissant du côté de la face 201b de l'écran. Les réflexions sur les faces latérales des coins de cube sont alors des réflexions de type miroir.

### Résumé

Un mode de réalisation prévoit un procédé de fabrication d'un moule primaire pour la réalisation d'un écran rétroréfléchissant, ce procédé comprenant les étapes suivantes : a) former sur la face avant d'un premier substrat comportant une face avant et une face arrière, une couche d'un matériau tel que le premier substrat soit gravable sélectivement par rapport à ladite couche ; et b) former des microrenfoncements depuis la face arrière du premier substrat par gravure sélective du premier substrat par rapport à ladite couche, chaque microrenfoncement débouchant sur la face arrière de ladite couche et ayant un fond sensiblement parallèle à la face avant du premier substrat et des première et deuxième parois latérales sensiblement orthogonales entre elles et sensiblement orthogonales au fond, les première et deuxième parois latérales et le fond du microrenfoncement se rejoignant en un même point et formant un trièdre.

Selon un mode de réalisation, le procédé comprend en outre, avant l'étape a), une étape de formation de rugosités sur la face avant du premier substrat.

Selon un mode de réalisation, l'étape de formation des rugosités sur la face avant du premier substrat comprend une étape de lithographie en niveaux de gris.

Selon un mode de réalisation, le procédé comprend en outre, après l'étape a), une étape de report du premier substrat sur un deuxième substrat de support, de façon que la face avant de ladite couche soit tournée vers le deuxième substrat.

Selon un mode de réalisation, les premier et deuxième substrats sont assemblés par collage moléculaire.

Selon un mode de réalisation, le procédé comprend en outre, entre l'étape a) et l'étape b), une étape d'amincissement du premier substrat par sa face arrière.

Selon un mode de réalisation, à l'étape b), les microrenfoncements sont réalisés par gravure ionique réactive profonde.

Selon un mode de réalisation, le premier substrat est en silicium et ladite couche est en oxyde de silicium.

Selon un mode de réalisation, le procédé comprend en outre une étape de formation, du côté de la face arrière du premier substrat, de tranchées à flancs obliques ou courbes, chaque microrenfoncement débouchant dans une tranchée.

Selon un mode de réalisation, le procédé comprend la fabrication d'un moule primaire par un procédé tel que défini ci-dessus, et la réplication des motifs de la face arrière du moule primaire sur une face d'un film, par moulage à partir du moule primaire.

Un autre mode de réalisation prévoit un moule primaire pour la réalisation d'un écran rétroréfléchissant, comprenant : un premier substrat comportant une face avant et une face arrière ; une couche d'un matériau tel que le premier substrat soit gravable sélectivement par rapport à ladite couche, revêtant la face avant du premier substrat ; et des microrenfoncements s'étendant depuis la face arrière du premier substrat, chaque microrenfoncement débouchant sur la face arrière de ladite couche et ayant un fond sensiblement parallèle à la face arrière du premier substrat et des première et deuxième parois latérales sensiblement orthogonales entre elles et sensiblement orthogonales au fond, les première et deuxième parois latérales et le fond du microrenfoncement se rejoignant en un même point et formant un trièdre.

Un autre mode de réalisation prévoit un écran rétroréfléchissant comportant un premier film dont une face comprend une pluralité de microrenfoncements, chaque microrenfoncement ayant un fond sensiblement parallèle au plan moyen de l'écran et des première et deuxième parois latérales sensiblement orthogonales entre elles et sensiblement orthogonales au fond, les première et deuxième parois latérales et le fond du microrenfoncement se rejoignant en un même point et formant un trièdre.

Selon un mode de réalisation, dans chaque microrenfoncement, les première et deuxième parois latérales et le fond du microrenfoncement sont revêtus par une métallisation réfléchissante.

Selon un mode de réalisation, la face du premier film comprend en outre des tranchées à flancs obliques ou incurvés, chaque microrenfoncement débouchant dans l'une des tranchées.

Selon un mode de réalisation, les tranchées sont des tranchées en V réalisées par usinage de la face du premier film, plusieurs microrenfoncements débouchant dans une même tranchée.

Selon un mode de réalisation, le premier film est en un matériau transparent.

Selon un mode de réalisation, le premier film est en un matériau non transparent.

Selon un mode de réalisation, l'écran comporte en outre une couche de colle transparente revêtant la face du premier film, et un deuxième film en un matériau transparent revêtant la couche.

Selon un mode de réalisation, le taux de recouvrement de l'écran par les microrenfoncements est inférieur à 50 %.

Selon un mode de réalisation, l'écran comprend des microrenfoncements de dimensions et/ou d'orientations différentes dans des zones différentes de l'écran.

Selon un mode de réalisation, les microrenfoncements sont répartis selon une disposition aléatoire ou semi-aléatoire sur la surface de l'écran.

Un autre mode de réalisation prévoit un procédé de fabrication d'un écran rétroréfléchissant tel que défini ci-dessus, comprenant la fabrication d'un moule primaire dont une face présente des structurations de même forme que les structurations de la face du premier film de l'écran.

Selon un mode de réalisation, la fabrication du moule primaire comprend une étape de gravure de microrenfoncements du côté d'une première face d'un substrat, chaque microrenfoncement ayant un fond sensiblement parallèle au plan moyen de l'écran et des première et deuxième parois latérales sensiblement orthogonales entre elles et sensiblement orthogonales au fond, les première et deuxième parois latérales et le fond du microrenfoncement se rejoignant en un même point et formant un trièdre.

Selon un mode de réalisation, la fabrication du moule primaire comprend en outre une étape de formation, du côté de la face du substrat, de tranchées à flancs obliques ou courbes, chaque microrenfoncement débouchant dans une tranchée.

Selon un mode de réalisation, le procédé comporte en outre une étape de réplication des motifs de ladite face du moule primaire sur ladite face du premier film, par moulage à partir du moule primaire.

Selon un mode de réalisation, l'étape de réplication comprend la réalisation d'un moule secondaire de forme complémentaire au moule primaire, par moulage à partir du moule primaire.

Un autre mode de réalisation prévoit un moule primaire pour la fabrication d'un écran rétroréfléchissant du type susmentionné, dont une face présente des structurations de même forme que les structurations de la face du premier film.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe représentant de façon schématique un exemple d'un système d'affichage d'une image sur un parebrise ;
la figure 2, précédemment décrite, est une vue en coupe représentant plus en détail un écran du système de la figure 1 ;
les figures 3A, 4A, 5A, 6A, 7A, 8A et 9A sont des vues en perspective illustrant schématiquement des étapes successives d'un exemple de procédé de fabrication d'un mode de réalisation d'un écran muni de microstructures rétroréfléchissantes ;
les figures 3B, 4B, 5B, 6B, 7B, 8B et 9B sont des vues en coupe des structures des figures 3A, 4A, 5A, 6A, 7A, 8A et 9A respectivement ;
les figures 10A, 10B, 10C et 10D sont des vues en coupe illustrant schématiquement une variante de réalisation du procédé des figures 3A, 3B, 4A, 4B, 5A, 5B, 6A, 6B, 7A, 7B, 8A, 8B et 9A, 9B ; et
les figures 11A, 11B, 11C, 11D, 11E, 11F et 11G sont des vues en coupe illustrant schématiquement une autre variante de réalisation du procédé des figures 3A, 3B, 4A, 4B, 5A, 5B, 6A, 6B, 7A, 7B, 8A, 8B et 9A, 9B.

### Description détaillée

De mêmes éléments ont été désignés par de mêmes références aux différentes figures et, de plus, les diverses figures ne sont pas tracées à l'échelle. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des vues en coupe correspondantes, étant entendu que, dans la pratique, les dispositifs décrits peuvent être orientés différemment. Sauf précision contraire, les expressions "approximativement", "environ", "sensiblement", et "de l'ordre de" signifient à 10 % près, de préférence à 1 % près, ou, lorsqu'il s'agit de valeurs angulaires ou assimilées (par exemple les qualificatifs d'orientation tels que les termes parallèle, orthogonal, vertical, horizontal, etc.) à 1 degré près, de préférence à 0,1° près.

Une limitation de l'écran 103 de la figure 2 est que son efficacité en rétroréflexion, très bonne pour des angles d'incidence du faisceau projeté voisins de la normale à l'écran, par exemple pour des angles d'incidence compris entre 0 et 20 degrés, chute fortement lorsque l'angle d'incidence du faisceau projeté augmente. A titre d'illustration, des mesures de l'intensité du faisceau rétroréfléchi ont été réalisées sur un écran du type décrit en relation avec la figure 2 pour différents angles du faisceau incident. Ces mesures montrent que l'intensité du faisceau rétroréfléchi est maximale pour un angle d'incidence nul (incidence normale), chute à environ 50 % de sa valeur maximale pour un angle d'incidence de 25°, et descend à 10 % de sa valeur maximale pour un angle d'incidence de 50°.

Ceci peut poser problème pour l'application à la projection d'une image sur un parebrise de véhicule. En effet, dans de nombreux véhicules, le parebrise est fortement incliné par rapport à la verticale. De plus, dans un système du type décrit en relation avec la figure 1, le projecteur 105 monté sur la tête de l'utilisateur peut avoir son axe principal de projection incliné vers le bas par rapport à l'horizontale. Ainsi, l'angle formé entre l'axe principal du projecteur 105 et l'écran 103 revêtant le parebrise peut atteindre des valeurs élevées, par exemple de l'ordre de 50 à 70 degrés. A de tels angles d'incidence, l'efficacité en rétroréflexion de l'écran 103 de la figure 2 est relativement faible.

Une autre limitation de l'écran 103 de la figure 2 réside dans sa grande complexité de fabrication, liée notamment au fait que les protubérances rétroréfléchissantes 203 présentent des faces obliques (par rapport au plan moyen de l'écran) dont les angles d'inclinaison doivent être contrôlés de façon très précise pour obtenir l'effet rétroréfléchissant recherché.

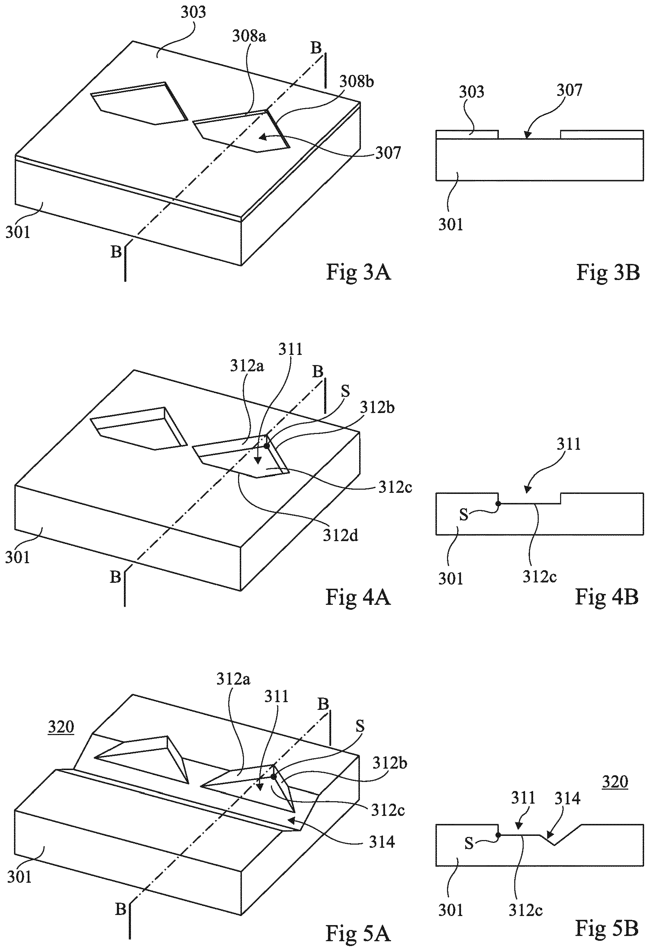

Les figures 3A, 3B, 4A, 4B, 5A, 5B, 6A, 6B, 7A, 7B, 8A, 8B, 9A et 9B illustrent schématiquement des étapes d'un procédé de fabrication d'un mode de réalisation d'un écran 400 muni de microstructures rétroréfléchissantes, compatible avec un système du type décrit en relation avec la figure 1. Les figures 3A, 4A, 5A, 6A, 7A, 8A et 9A sont des vues en perspective, et les figures 3B, 4B, 5B, 6B, 7B, 8B et 9B sont des vues en coupe selon le plan B-B des figures 3A, 4A, 5A, 6A, 7A, 8A et 9A respectivement.

Les figures 3A, 3B, 4A, 4B, 5A et 5B illustrent des étapes de fabrication d'un moule primaire 320 (figures 5A et 5B) destiné à être utilisé lors de la fabrication de l'écran 400 proprement dit.

Les figures 3A et 3B illustrent une étape de disposition d'un masque 303 sur la face supérieure d'un substrat 301 dans lequel on souhaite former le moule primaire 320. Le substrat 301 est par exemple en verre, en silicium, en un polymère thermoplastique tel que le poly(méthacrylate de méthyle) ou PMMA, ou en tout autre matériau adapté. La surface supérieure du substrat 301 est de préférence plane. Le masque 303 comprend des ouvertures traversantes 307 laissant apparaître des portions de la surface supérieure du substrat 301 destinées à être gravées lors d'une étape ultérieure. Le masque 303 est en un matériau adapté à protéger les portions non exposées du substrat 301 lors de l'étape ultérieure de gravure. A titre d'exemple, le masque 303 est en métal ou en résine. Vu de dessus, chaque ouverture 307 formée dans le masque 303 comprend deux parois latérales 308a et 308b sensiblement orthogonales entre elles, se rejoignant pour former un angle d'approximativement 90 degrés. Chaque ouverture 307 a par exemple, vu de dessus, la forme d'un pentagone convexe. Dans l'exemple représenté, chaque ouverture 307 a, vu de dessus, la forme d'un triangle isocèle rectangle auquel est juxtaposé un trapèze. Les côtés du triangle rectangle correspondent aux parois latérales 308a et 308b, et la base du triangle rectangle est confondue avec une base (la grande base dans l'exemple représenté) du trapèze. Les ouvertures 307 sont par exemple toutes sensiblement identiques et orientées sensiblement de la même manière. Dans l'exemple représenté, seules deux ouvertures 307 ont été représentées par souci de simplification. En pratique, un grand nombre d'ouvertures 307 peut être prévu. A titre d'exemple, les ouvertures 307 sont régulièrement réparties sur toute la surface supérieure du substrat 301. Les ouvertures 307 sont par exemple disposées en matrice selon des rangées et des colonnes.

Les figures 4A et 4B illustrent une étape de formation de cavités ou renfoncements 311 s'étendant sensiblement verticalement dans le substrat 301, depuis sa face supérieure, en regard des ouvertures 307 du masque 303. Chaque cavité 311 comprend des parois latérales sensiblement orthogonales à la face supérieure du substrat 301, et un fond sensiblement parallèle à la face supérieure du substrat. En particulier, chaque cavité comprend deux parois latérales 312a et 312b sensiblement orthogonales entre elles, coïncidant sensiblement, vu de dessus, avec les parois latérales 308a et 308b des ouvertures 307. Les parois latérales 312a et 312b et le fond 312c de chaque cavité 311 se rejoignent en un même point S, et définissent un trièdre trirectangle ou coin de cube ayant le point S pour sommet. Dans chaque cavité 311, l'axe de symétrie ou axe central du coin de cube de sommet S forme, par construction, un angle d'approximativement 54,74 degrés avec la face supérieure du substrat 301.

Comme cela sera expliqué plus en détail ci-après, dans chaque cavité 311, le coin de cube de sommet S correspond à un microrenfoncement rétroréfléchissant du futur écran 400. La paroi latérale 312d de chaque cavité 311 opposée au sommet S (correspondant à la petite base du trapèze de l'ouverture 307 dans l'exemple représenté) est de préférence relativement éloignée du sommet S, de façon à définir dans la cavité 311 une région de dégagement en regard de la base du coin de cube. A titre d'exemple, vu de dessus, la cavité 311 présente, dans la direction de la bissectrice de l'angle formé par les parois latérales 312a et 312b, une dimension comprise entre 1 et 1,5 fois la profondeur de la cavité. Les cavités 311 ont par exemple une profondeur comprise dans la plage allant de 20 à 500 µm et de préférence comprise dans la plage allant de 50 à 200 µm.

Les cavités 311 sont par exemple formées par un procédé de gravure réactive ionique profonde, généralement désigné dans la technique par l'acronyme anglo-saxon DRIE ("Deep Reactive Ion Etching"). Un tel procédé présente l'avantage de permettre de réaliser aisément des cavités ayant des faces latérales sensiblement verticales sur des profondeurs relativement élevées, et un fond sensiblement horizontal. Tout autre procédé de gravure adapté pourra cependant être utilisé, par exemple une gravure par laser ou une gravure par rayons X.

Une fois la gravure réalisée, le masque 303 (non représenté sur les figures 4A et 4B) est retiré.

Les figures 5A et 5B illustrent une étape de formation de tranchées ou évidements 314 à flancs obliques ou incurvés dans le substrat 301, depuis la face supérieure du substrat. Les tranchées 314 ont une profondeur inférieure à l'épaisseur du substrat 301. Les tranchées 314 traversent les régions de dégagement des cavités 311, en évitant les régions en coins de cube correspondant aux microrenfoncements rétroréfléchissants de l'écran 400. De préférence, une même tranchée 314 traverse plusieurs cavités 311. A titre d'exemple, vu de dessus, chaque tranchée 314 traverse de part en part le substrat 301 dans une direction d'alignement des cavités 311 ne passant pas par les portions en coins de cube des cavités 311. A titre de variante, une tranchée 314 localisée est formée au niveau de chaque cavité 311, c'est-à-dire que chaque tranchée 314 traverse une unique cavité 311.

Les tranchées 314 ont une profondeur supérieure ou égale à celle des cavités 311, par exemple une profondeur comprise entre 1 et 1,5 fois la profondeur des cavités 311. Les tranchées 314 présentent de préférence un plan de symétrie longitudinal sensiblement orthogonal à la surface supérieure du substrat. La profondeur des tranchées 314, leur largeur, et l'inclinaison de leurs flancs, sont choisies de façon à éliminer tout ou partie des parois verticales des cavités 311 qui ne correspondent pas aux régions rétroréfléchissantes en coins de cube de l'écran 400.

A titre d'exemple, les tranchées 314 sont des tranchées en V. Des tranchées en V peuvent par exemple être obtenues par usinage du substrat au moyen d'une scie, ou par gravure. Les tranchées en V ont par exemple une ouverture angulaire comprise entre 20 et 60 degrés, et de préférence de l'ordre de 50 degrés.

A titre de variante, les tranchées 314 sont des tranchées à flancs incurvés, par exemple des tranchées en C. De telles tranchées peuvent par exemple être réalisées par gravure.

La prévision des tranchées 314 permet de faciliter une étape ultérieure de démoulage d'un élément de l'écran 400 réalisé à partir du moule 320. On notera toutefois que les tranchées 314 sont optionnelles, et peuvent notamment être omises s'il ne se pose pas de difficulté particulière de démoulage lors de cette étape ultérieure. On notera en outre que l'angle d'inclinaison des flancs des tranchées 314 n'a pas besoin d'être précisément contrôlé, car les tranchées 314 servent uniquement à faciliter le démoulage de l'écran, mais n'ont pas de fonction optique dans l'écran final. La structure obtenue à l'issue des étapes 3A, 3B, 4A, 4B, 5A, 5B correspond au moule primaire 320.

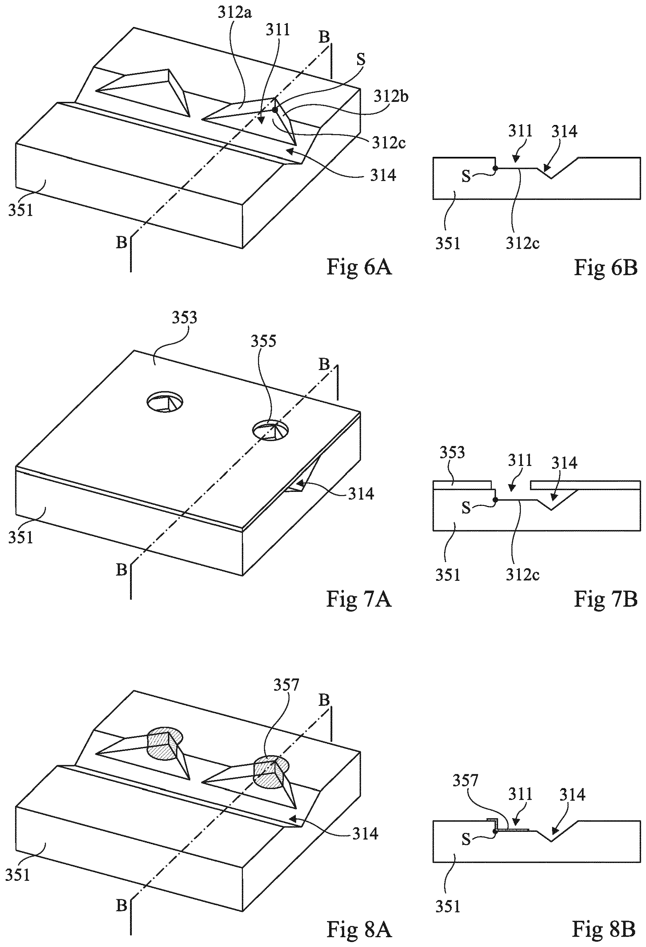

Les figures 6A et 6B illustrent une étape au cours de laquelle les structurations de la surface supérieure du moule primaire 320 sont répliquées, par moulage, sur une face (la face supérieure dans l'exemple représenté) d'un film 351. A titre d'exemple, le film 351 est en un matériau plastique, par exemple de type polyméthacrylate de méthyle. Dans cet exemple, le film 351 est en un matériau transparent. La réplication des motifs du moule primaire 320 sur une face du film 351, passe par la formation, à partir du moule primaire 320, d'un moule secondaire (non représenté) ayant une forme complémentaire de celle du moule primaire 320. Les structurations de la face supérieure du film 351 sont alors obtenues, à partir du moule secondaire, par thermoformage ou par toute autre technique de moulage adaptée. Par souci de simplification, dans la suite de la description, les références 311, 312a, 312b, 312c, 312d, S et 314 utilisées pour désigner des éléments des structurations de la face supérieure du moule primaire 320, seront utilisées pour désigner les éléments correspondants des structurations de la face supérieure du film 351. La face non structurée du film 351, à savoir sa face inférieure dans l'exemple représenté, est de préférence sensiblement plane.

Les figures 7A et 7B illustrent une étape de disposition d'un masque 353 sur la face supérieure du film 351. Le masque 353 comprend des ouvertures traversantes 355 laissant apparaître des portions de la face supérieure du film 351. Plus particulièrement, les ouvertures 355 sont disposées sensiblement en regard des coins de cube de sommet S correspondant aux microrenfoncements rétroréfléchissants de l'écran 400. Le reste de la surface supérieure du film 351, et notamment les portions planes de la surface supérieure du film 351 non occupées par les cavités 311 et les tranchées 314, ainsi que les portions de la surface supérieure du film 351 correspondant aux tranchées 314 et aux régions de dégagement des cavités 311, sont recouvertes par le masque 353.

Les figures 8A et 8B illustrent le résultat d'une étape de dépôt, au travers des ouvertures 355 du masque 353, de métallisations réfléchissantes 357 revêtant les parois latérales et le fond des microrenfoncements en coins de cube de la face supérieure du film 351. Les métallisations 357 sont par exemple en aluminium. Les métallisations 357 peuvent être déposées par pulvérisation au travers des ouvertures du masque. En pratique, les métallisations 357 peuvent déborder sur la face supérieure du film 351 légèrement au-delà de la limite des coins de cube de sommet S. A titre d'exemple, vu de dessus, chaque métallisation 357 peut avoir la forme d'une pastille sensiblement circulaire dans laquelle s'inscrit le triangle rectangle correspondant, vu de dessus, au renfoncement en coin de cube revêtu par la métallisation 357.

Une fois les métallisations 357 déposées, le masque 353 est retiré.

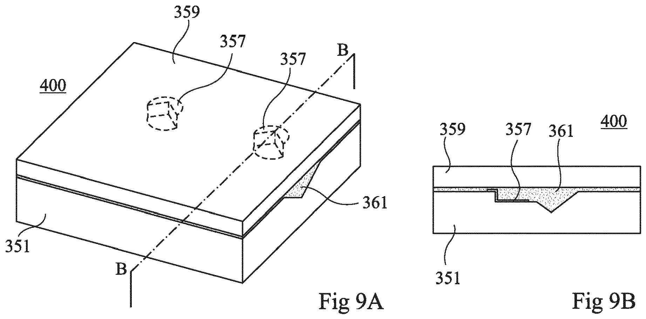

Les figures 9A et 9B illustrent une étape de collage d'un film de revêtement transparent 359 sur la face supérieure du film 351. Dans cet exemple, les faces du film 359 sont sensiblement planes. Une couche de colle transparente 361 comblant notamment les cavités 311 et les tranchées 314 de la face supérieure du film 351, fait interface entre la face supérieure du film 351 et la face inférieure du film 359. De préférence, le film de revêtement 359 et la colle transparente 361 ont sensiblement le même indice de réfraction que le film 351. Le film de revêtement 359 et la couche de colle transparente 361 permettent de garantir une bonne transparence de l'écran 400 en dehors des zones revêtues par les métallisations 357. L'assemblage ainsi obtenu forme l'écran 400.

L'écran 400 présente des portions rétroréfléchissantes régulièrement réparties sur toute sa surface, correspondant aux structurations en coins de cube métallisées du film 351. Chaque portion d'écran rétroréfléchissante est entourée par une portion d'écran transparente, de sorte que l'écran est partiellement rétroréfléchissant et partiellement transparent. L'écran 400 est ainsi adapté à un fonctionnement du type décrit en relation avec la figure 1 (la face supérieure de l'écran étant tournée vers le projecteur 105). Pour obtenir une bonne transparence de l'écran 400 permettant la visualisation d'une scène extérieure, le taux de recouvrement de l'écran 400 par les portions rétroréfléchissantes est par exemple inférieur à 50 %, et de préférence inférieur à 20 %.

Lorsqu'ils pénètrent dans l'écran 400 par la face supérieure du film 359, les rayons incidents sont déviés d'un angle qui dépend de l'indice optique du film 359. L'efficacité maximale en rétroréflexion des structurations en coin de cube de l'écran 400 est en principe obtenue lorsque les rayons projetés sur ces structurations sont parallèles à l'axe central des coins de cube de sommet S, c'est-à-dire lorsque les rayons se propageant à l'intérieur de l'écran sont inclinés d'environ 54,74 degrés par rapport au plan moyen de l'écran. Une telle inclinaison des rayons à l'intérieur de l'écran ne peut généralement pas être obtenue dans la pratique, cette inclinaison étant supérieure à l'angle limite de réfraction du dioptre supérieur de l'écran. A titre d'exemple, pour un film 359 d'indice optique de l'ordre de 1,5, l'angle limite de réfraction est d'environ 42 degrés. On notera en outre que plus l'angle d'incidence des rayons lumineux sur l'écran 400 est élevé, plus les pertes par réflexion sur la face supérieure de l'écran 400 sont importantes. En fonction des matériaux choisis, on pourra aisément trouver, par mesure et/ou simulation, l'angle d'incidence des rayons lumineux pour lequel l'efficacité en rétroréflexion de l'écran est maximale. A titre d'exemple, des analyses ont montré que, lorsque les films 359 et 351 et la couche de colle 361 ont un indice de réfraction de l'ordre de 1,5, l'efficacité maximale en rétroréflexion de l'écran 400 est obtenue pour un angle d'incidence (à l'extérieur de l'écran) de l'ordre de 60 degrés. Plus généralement, les études réalisées montrent que la structure proposée procure une bonne efficacité en rétroréflexion pour des angles d'incidence compris dans la plage allant de 30 à 80 degrés, et de préférence dans la plage allant de 50 à 70 degrés. Ainsi, l'écran 400 est bien adapté à l'application à la projection d'une image sur un pare-brise de véhicule.

Un autre avantage de l'écran 400 est qu'il est relativement simple à réaliser, en raison du fait que les microrenfoncements en coins de cube formant les portions rétroréfléchissantes de l'écran ne comportent pas de faces obliques par rapport au plan moyen de l'écran. Les faces des microrenfoncements en coins de cube de l'écran 400 sont sensiblement orthogonales ou parallèles au plan moyen de l'écran. Ainsi, les microrenfoncements en coins de cube peuvent être obtenus au moyen d'une simple gravure à flancs verticaux depuis la surface supérieure du substrat 301.

A titre de variante, à l'étape des figures 6A et 6B, au lieu de répliquer par moulage les structurations de la surface supérieure du moule primaire 320 sur la face supérieure du film 351, on peut prévoir de former par moulage, sur la face supérieure du film 351, des structurations complémentaires de celles de la face supérieure du moule primaire 320. Pour cela, on peut par exemple réaliser à partir du moule secondaire (non représenté) un moule tertiaire (non représenté) ayant des structurations identiques ou similaires à celles du moule primaire 320. Ce moule tertiaire peut ensuite être utilisé pour former par moulage les structurations de la face supérieure du film 351. La suite du procédé de fabrication de l'écran 400 est alors sensiblement identique à ce qui a été décrit ci-dessus, à quelques ajustements près à la portée de l'homme du métier. L'écran 400 obtenu comprend alors non plus des renfoncements rétroréfléchissants en coins de cube, mais des protubérances rétroréfléchissantes en coins de cube. Dans cette variante, l'écran 400 est destiné à être éclairé par sa face inférieure.

Des modes de réalisation particuliers ont été décrits. Diverses variantes et modifications apparaîtront à l'homme de l'art. En particulier, les modes de réalisation décrits ne se limitent pas à l'exemple susmentionné dans lequel les microrenfoncements en coins de cube formant les portions rétroréfléchissantes de l'écran 400 sont sensiblement identiques et orientés de la même manière. En pratique, selon les besoins de l'application, des microrenfoncements en coins de cube peuvent avoir des dimensions différentes et/ou des orientations différentes (en vue de dessus) dans des zones différentes de l'écran.

En outre, les microrenfoncements en coins de cube formant les portions rétroréfléchissantes de l'écran 400 ne sont pas nécessairement alignés en lignes et en colonnes, mais peuvent présenter une disposition aléatoire ou semi-aléatoire sur la surface de l'écran, de façon notamment à éviter d'éventuels phénomènes diffractifs susceptibles de se produire sous certains angles d'incidence lorsque les microrenfoncements ont une disposition régulière.

De plus, les modes de réalisation décrits ne se limitent pas à l'exemple de procédé de réalisation des métallisations réfléchissantes 357 décrit en relation avec les figures 7A, 7B, 8A, 8B. A titre de variante, l'étape de réalisation du masque 353 décrite en relation avec les figures 7A et 7B peut être omise. A la place, une couche métallique conforme revêtant toute la surface supérieure de la structure des figures 6A et 6B peut être réalisée. Le métal déposé peut ensuite être retiré au niveau des régions planes supérieures de la structure (correspondant aux zones transparentes de l'écran), par exemple par polissage mécanochimique. Lors de cette étape, seules les portions de la couche métallique revêtant les parois des cavités 311, et, le cas échéant, des tranchées 314, sont conservées, formant les métallisations réfléchissantes 357.

Par ailleurs, on notera que dans une application du type décrit en relation avec la figure 1, la source lumineuse 105 n'est généralement pas placée exactement dans l'axe du regard de l'utilisateur. Ainsi, l'écran 400 doit de préférence être adapté à diffuser la lumière rétroréfléchie dans un cône de diffusion englobant les pupilles de l'utilisateur, pour que l'utilisateur puisse voir l'image affichée par le projecteur. En pratique, les inventeurs ont constaté que les effets de diffraction sur les bords des microrenfoncements et/ou les inévitables imperfections de surface de l'écran, peuvent suffire à obtenir l'effet de diffusion requis. Pour amplifier et/ou contrôler cette diffusion, on peut par exemple jouer sur la rugosité des flancs et du fond des cavités 311 du moule primaire 320.

En outre, les modes de réalisation décrits ne se limitent pas à l'application à la projection d'une image sur une surface transparente. En particulier, les modes de réalisation décrits peuvent avoir des applications dans divers domaines utilisant des surfaces rétroréfléchissantes, non nécessairement transparentes, par exemple à des fins de signalisation. Dans certains cas, il peut en effet être souhaitable de pouvoir disposer d'une surface présentant une bonne efficacité en rétroréflexion pour des angles d'incidences élevés. A titre d'exemple, une telle surface peut avoir une utilité pour des applications de signalisation au sol dans le domaine des routes pour véhicules automobiles. Dans le cas où la transparence n'est pas recherchée, on cherchera de préférence à maximiser le taux de recouvrement de l'écran par les portions rétroréfléchissantes en coins de cube. En outre, le matériau du film 351 pourra être non transparent. Le film de revêtement 359 et la couche de colle intermédiaire 361 doivent en revanche être transparents pour permettre à la lumière incidente d'atteindre les métallisations en coins de cube 357 puis de ressortir de l'écran après réflexion sur les faces des métallisations. A titre de variante, le film de revêtement 359 et la couche de colle intermédiaire 361 peuvent être omis. Par ailleurs, si la transparence de l'écran n'est pas requise, les métallisations réfléchissantes 357 ne sont pas nécessairement localisées sur les portions en coin de cube du substrat 351, mais peuvent former une couche continue réalisée par dépôt conforme, revêtant toute la surface supérieure du substrat 351.

On notera que dans la présente description, le terme film a été employé pour désigner les éléments 351 et 359 de l'écran 400. Ce terme doit toutefois s'entendre de façon large, et inclut notamment des éléments similaires à des films tels que des feuilles, plaques, etc.

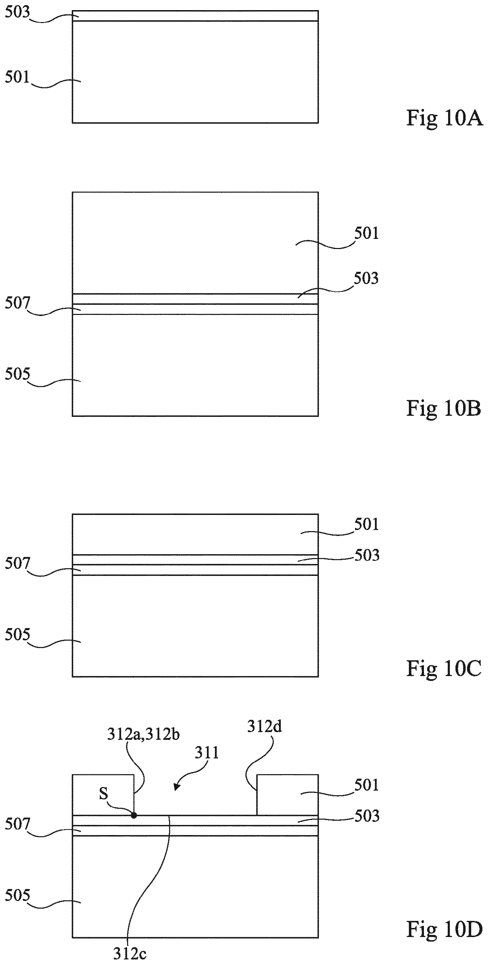

Les figures 10A, 10B, 10C et 10D sont des vues en coupe illustrant schématiquement une variante de réalisation du procédé des figures 3A, 3B, 4A, 4B, 5A, 5B, 6A, 6B, 7A, 7B, 8A, 8B et 9A, 9B. Le procédé des figures 10A, 10B, 10C et 10D diffère du procédé des figures 3A, 3B, 4A, 4B, 5A, 5B, 6A, 6B, 7A, 7B, 8A, 8B et 9A, 9B essentiellement dans les étapes de fabrication du moule primaire utilisé pour réaliser l'écran rétroréfléchissant.

La figure 10A illustre une étape initiale au cours de laquelle on forme, sur et en contact avec la face avant d'un premier substrat 501 comportant une face avant (la face supérieure dans l'orientation de la figure 10A) et une face arrière (la face inférieure dans l'orientation de la figure 10A), une couche 503 d'un matériau tel que le substrat 501 soit gravable sélectivement par rapport à la couche 503. La face avant du substrat 501 est de préférence plane. A titre d'exemple, le substrat 501 est en silicium et la couche 503 est en oxyde de silicium. La couche 503 est par exemple formée par oxydation de la surface supérieure du substrat 501.

La figure 10B illustre une étape postérieure à la formation de la couche 503, au cours de laquelle le premier substrat 501 est reporté sur un deuxième substrat ou substrat de support 505, de façon que la face avant de la couche 503, c'est-à-dire la face de la couche 503 opposée au substrat 501, soit tournée vers le substrat 505. A titre d'exemple, le substrat 505 est un substrat de silicium identique ou similaire au substrat 501, et le substrat 505 est revêtu, du côté de sa face avant (la face supérieure dans l'orientation de la figure 10B), d'une couche d'oxyde de silicium 507 identique ou similaire à la couche 503. Lors de l'étape de report de la figure 10B, la face avant de la couche 503 est mise en contact avec la face avant de la couche 507. Dans cet exemple, les faces avant respectives des couches d'oxyde de silicium 503 et 507 sont préalablement traitées en surface pour obtenir un collage moléculaire des deux couches lors de leur mise en contact. Les modes de réalisation décrits ne se limitent toutefois pas à ce cas particulier. A titre de variante, le substrat de support 505 peut ne pas être de même nature que le substrat 501. De plus, le substrat de support 505 n'est pas nécessairement revêtu d'une couche de même nature que la couche 503. En outre, le collage des substrats 501 et 505 peut être réalisé par une technique autre que le collage moléculaire.

La figure 10C illustre une étape postérieure à l'étape de report du substrat 501 sur le substrat 505, au cours de laquelle le substrat 501 est aminci à partir de sa face arrière (c'est-à-dire sa face supérieure dans l'orientation de la figure 10C). L'amincissement comprend par exemple une étape de meulage de la face arrière du substrat 501, suivie d'une étape de planarisation, par exemple un polissage mécanochimique. Plus généralement, tout autre procédé d'amincissement connu peut être utilisé. A titre de variante, l'amincissement peut comprendre une étape de clivage, suivie d'une étape de planarisation. Dans ce cas, une étape préalable d'implantation ionique peut être prévue pour définir la zone de clivage. Si l'épaisseur de substrat 501 subsistant au-dessus de la couche 503 à l'issue de l'étape de clivage est insuffisante, une étape de dépôt ou de croissance d'une couche du matériau du substrat sur la face arrière du substrat 501 peut être prévue après l'étape de clivage.

A l'issue de l'étape d'amincissement, la face arrière du substrat 501 est de préférence sensiblement plane et parallèle à la face avant du substrat 501.

L'épaisseur de substrat 501 subsistant au-dessus de la couche 503 à l'issue de l'étape d'amincissement est égale à la profondeur des cavités ou renfoncements en coins de cube 311 du moule primaire que l'on cherche à réaliser. A titre d'exemple, l'épaisseur de substrat 501 subsistant au-dessus de la couche 503 est comprise dans la plage allant de 20 à 500 µm et de préférence comprise dans la plage allant de 50 à 200 µm.

Le procédé des figures 3A, 3B, 4A, 4B, 5A, 5B, 6A, 6B, 7A, 7B, 8A, 8B et 9A, 9B est ensuite mis en oeuvre de façon identique ou similaire à ce qui a été décrit ci-dessus, en remplaçant le substrat 301 par l'assemblage formé par le substrat aminci 501, la couche 503, le substrat de support 505 et la couche 507. Pour la mise en oeuvre de ce procédé, la face arrière du substrat aminci 501 se substitue à la face supérieure du substrat 301.

La figure 10D illustre l'étape de formation des cavités ou renfoncements 311 du moule primaire, s'étendant sensiblement verticalement dans le substrat 501, depuis sa face arrière. Cette étape correspond à l'étape décrite ci-dessus en relation avec les figures 4A et 4B. Dans le procédé des figures 10A à 10D, le procédé de gravure utilisé pour former les cavités 311 est choisi pour graver le substrat de façon sélective par rapport au matériau de la couche 503. A titre d'exemple, les cavités 311 sont réalisées par gravure réactive ionique profonde (DRIE). La couche 503 forme une couche d'arrêt de gravure, c'est-à-dire que la gravure des cavités 311 s'interrompt sur la face arrière de la couche 503. Ainsi, le fond 312c de chaque cavité 311 est formé par la face arrière de la couche 503.

Les autres étapes du procédé de fabrication du moule primaire 320 puis du procédé de fabrication de l'écran rétroréfléchissant 400 à partir du moule primaire 320, sont identiques ou similaires à ce qui a été décrit en relation avec les figures 3A, 3B, 4A, 4B, 5A, 5B, 6A, 6B, 7A, 7B, 8A, 8B et 9A, 9B.

Un avantage du procédé des figures 10A à 10D réside dans le fait que la présence de la couche d'arrêt de gravure 503 permet de garantir une bonne planéité du fond 312c des cavités 311. En particulier, le fond 312c de chaque cavité 311 reste plan jusqu'au sommet S du coin de cube, de sorte que l'angle droit obtenu entre le fond 312c et les faces latérales 312a, 312b de chaque cavité 311 est net (sans arrondi). Ceci permet d'améliorer les performances en rétroréflexion de l'écran final par rapport au procédé des figures 3A, 3B, 4A, 4B, 5A, 5B, 6A, 6B, 7A, 7B, 8A, 8B et 9A, 9B, dans lequel l'angle entre le fond 312c et les parois latérales 312a, 312b de chaque cavité 311 est susceptible de présenter un léger arrondi.

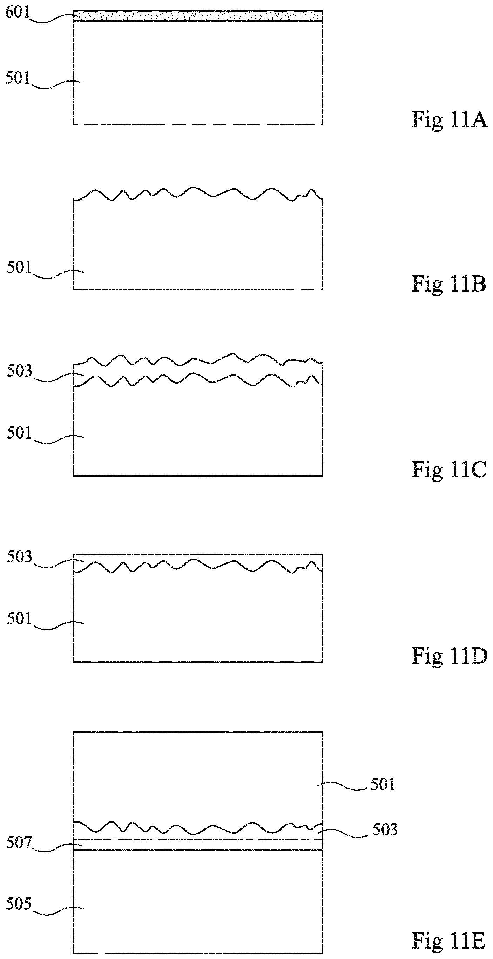

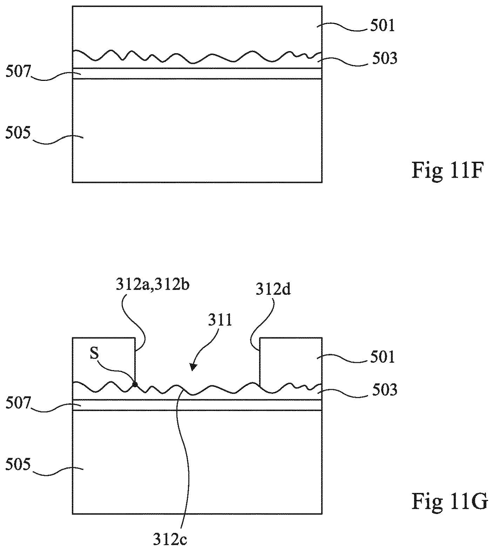

Les figures 11A, 11B, 11C, 11D, 11E, 11F et 11G sont des vues en coupe illustrant schématiquement une autre variante de réalisation du procédé des figures 3A, 3B, 4A, 4B, 5A, 5B, 6A, 6B, 7A, 7B, 8A, 8B et 9A, 9B.

Le procédé des figures 11A à 11G comporte des similitudes avec le procédé des figures 10A à 10D, et tire parti de la présence de la couche d'arrêt de gravure 503 pour former des rugosités sur le fond 312c des cavités 311 du moule primaire, de façon à introduire une fonction de diffusion contrôlée de la lumière rétroréfléchie par l'écran, afin que l'utilisateur puisse voir l'image affichée par le projecteur même lorsque la source lumineuse 105 n'est pas placée exactement dans l'axe du regard de l'utilisateur. Cette diffusion contrôlée est en particulier intéressante dans des systèmes dans lesquels le projecteur est dissocié de l'utilisateur, par exemple lorsque le projecteur est solidaire du véhicule et non pas de l'utilisateur lui-même.

Les figures 11A et 11B illustrent une étape initiale de formation de rugosités sur la face avant du substrat 501, avant le dépôt de la couche 503. Pour cela, dans l'exemple représenté, on prévoit de déposer sur la face avant du substrat 501 une couche de résine photosensible 601 (figure 11A), dans laquelle on forme le motif de rugosités souhaité par une étape de lithographie en niveaux de gris. Les structurations (non visibles sur la figure 11A) de la couche de résine 601 sont ensuite transférées par gravure sur la face supérieure du substrat 501 (figure 11B). Plus généralement, tout autre procédé permettant de structurer la surface supérieure du substrat 501 pour obtenir la fonction de diffusion recherchée peut être utilisé. Des exemples de motifs de rugosités permettant d'obtenir une diffusion contrôlée de la lumière sont par exemple décrits dans le brevet US8114248. De préférence, les rugosités formées sur la face avant du substrat 501 ont des dimensions supérieures à la plus grande longueur d'onde de la lumière que l'on cherche à rétroréfléchir.

La figure 11C illustre une étape de formation de la couche 503 sur et en contact avec la face avant structurée du substrat 501. Cette étape est par exemple identique ou similaire à ce qui a été décrit en relation avec la figure 10A. Une fois la couche 503 formée, cette dernière comporte sur sa face arrière (c'est-à-dire sa face inférieure dans l'orientation de la figure 11C) des structurations complémentaires de celles de la face avant du substrat 501. On notera que dans le cas où la couche 503 est formée par oxydation de la face avant du substrat 501, les rugosités préalablement formées sur la face avant du substrat 501 peuvent être déformées par l'oxydation. Le dimensionnement des rugosités formées sur la face avant du substrat 501 aux étapes des figures 11A et 11B peut être réalisé en tenant compte de ces déformations. En outre, bien que l'étape ultérieure de gravure des cavités 311 du moule primaire soit réalisée par un procédé de gravure sélective du substrat 501 par rapport à la couche 503, cette étape de gravure peut néanmoins entrainer une déformation des structurations de la face arrière de la couche 503. On pourra tenir compte de cette déformation dans le dimensionnement des rugosités formées sur la face avant du substrat 501 aux étapes des figures 11A et 11B.

La figure 11D illustre une étape de planarisation de la face avant (c'est-à-dire la face supérieure dans l'orientation de la figure 11D) de la couche 503.

La figure 11E illustre une étape postérieure au dépôt de la couche 503, au cours de laquelle le substrat 501 est reporté sur un deuxième substrat ou substrat de support 505, de façon que la face avant de la couche 503, c'est-à-dire la face de la couche 503 opposée au substrat 501, soit tournée vers le substrat 505. Cette étape est par exemple identique ou similaire à ce qui a été décrit en relation avec la figure 10B.

La figure 11F illustre une étape postérieure à l'étape de report du substrat 501 sur le substrat 505, au cours de laquelle le substrat 501 est aminci à partir de sa face arrière. Cette étape est par exemple identique ou similaire à ce qui a été décrit en relation avec la figure 10C.

Le procédé des figures 3A, 3B, 4A, 4B, 5A, 5B, 6A, 6B, 7A, 7B, 8A, 8B et 9A, 9B est ensuite mis en oeuvre de façon identique ou similaire à ce qui a été décrit ci-dessus, en remplaçant le substrat 301 par l'assemblage obtenu à l'issue de l'étape de la figure 11F. Pour la mise en oeuvre de ce procédé, la face arrière du substrat aminci 501 se substitue à la face supérieure du substrat 301.

La figure 11G illustre l'étape de formation des cavités ou renfoncements 311 du moule primaire, s'étendant sensiblement verticalement dans le substrat 501, depuis sa face arrière. Cette étape est par exemple identique ou similaire à ce qui a été décrit en relation avec la figure 10D.

Les autres étapes du procédé de fabrication du moule primaire 320 puis du procédé de fabrication de l'écran rétroréfléchissant 400 à partir du moule primaire 320, sont identiques ou similaires à ce qui a été décrit ci-dessus et ne seront pas détaillées à nouveau.

Un avantage du procédé des figures 11A à 11G est qu'il permet, de façon relativement simple, de réaliser, dans les zones en coins de cube des cavités 311 du moule primaire 320, correspondant aux portions rétroréfléchissantes de l'écran 400, des structurations adaptées à augmenter l'ouverture du cône de diffusion de la lumière rétroréfléchie.

On notera que dans les exemples de procédé de fabrication du moule primaire des figures 10A à 10D et 11A à 11G, l'étape d'amincissement du substrat 501 par sa face arrière peut être omise si l'épaisseur du substrat 501 est déjà égale à la profondeur des cavités ou renfoncements en coins de cube 311 que l'on cherche à réaliser.

Dans les exemples des figures 10A à 10D et 11A à 11G, le substrat de support 505 sur lequel est reporté le substrat 501 et la couche d'arrêt de gravure 503 a pour fonction d'assurer la tenue mécanique de l'assemblage à partir duquel est formé le moule primaire. En particulier, le substrat de support 505 est nécessaire lorsque le moule primaire comprend des tranchées de démoulage 314 traversant de part en part le substrat tel que cela a été décrit en relation avec les figures 5A et 5B. En effet, les tranchées 314 étant plus profondes que les cavités 311, la formation des tranchées 314 revient à découper le substrat 501 en bandes disjointes. En l'absence du substrat de support 505, ces bandes de substrat 501 se désolidariseraient les unes des autres.

## Revendications

1. Procédé de fabrication d'un moule primaire (320) pour la réalisation d'un écran rétroréfléchissant (400), ce procédé comprenant les étapes suivantes :
a) former sur la face avant d'un premier substrat (501) comportant une face avant et une face arrière, une couche (503) d'un matériau tel que le premier substrat (501) soit gravable sélectivement par rapport à ladite couche (503) ; et
b) former des microrenfoncements (311) depuis la face arrière du premier substrat (501) par gravure sélective du premier substrat (501) par rapport à ladite couche (503), chaque microrenfoncement (311) débouchant sur la face arrière de ladite couche (503) et ayant un fond (312c) sensiblement parallèle à la face avant du premier substrat (501) et des première (312a) et deuxième (312b) parois latérales sensiblement orthogonales entre elles et sensiblement orthogonales au fond (312c), les première (312a) et deuxième (312b) parois latérales et le fond (312c) du microrenfoncement se rejoignant en un même point (S) et formant un trièdre.

2. Procédé selon la revendication 1, comprenant en outre, avant l'étape a), une étape de formation de rugosités sur la face avant du premier substrat (501).

3. Procédé selon la revendication 2, dans lequel l'étape de formation des rugosités sur la face avant du premier substrat (501) comprend une étape de lithographie en niveaux de gris.

4. Procédé selon l'une quelconque des revendications 1 à 3, comprenant en outre, après l'étape a), une étape de report du premier substrat (501) sur un deuxième substrat (505) de support, de façon que la face avant de ladite couche (503) soit tournée vers le deuxième substrat (505).

5. Procédé selon la revendication 4, dans lequel les premier (501) et deuxième (505) substrats sont assemblés par collage moléculaire.

6. Procédé selon l'une quelconque des revendications 1 à 5, comprenant en outre, entre l'étape a) et l'étape b), une étape d'amincissement du premier substrat (501) par sa face arrière.

7. Procédé selon l'une quelconque des revendications 1 à 6, dans lequel, à l'étape b), les microrenfoncements (311) sont réalisés par gravure ionique réactive profonde.

8. Procédé selon l'une quelconque des revendications 1 à 7, dans lequel le premier substrat (501) est en silicium et dans lequel ladite couche (503) est en oxyde de silicium.

9. Procédé selon l'une quelconque des revendications 1 à 8, comprenant en outre une étape de formation, du côté de la face arrière du premier substrat (501), de tranchées (314) à flancs obliques ou courbes, chaque microrenfoncement (311) débouchant dans une tranchée (314).

10. Procédé de fabrication d'un écran rétroréfléchissant (400), comprenant la fabrication d'un moule primaire (320) par un procédé selon l'une quelconque des revendications 1 à 9, et la réplication des motifs de la face arrière du moule primaire (320) sur une face d'un film (351), par moulage à partir du moule primaire (320).

11. Moule primaire pour la réalisation d'un écran rétroréfléchissant (400), comprenant :
un premier substrat (501) comportant une face avant et une face arrière ;
une couche (503) d'un matériau tel que le premier substrat (501) soit gravable sélectivement par rapport à ladite couche (503), revêtant la face avant du premier substrat (501) ; et
des microrenfoncements (311) s'étendant depuis la face arrière du premier substrat (501), chaque microrenfoncement (311) débouchant sur la face arrière de ladite couche (503) et ayant un fond (312c) sensiblement parallèle à la face arrière du premier substrat (501) et des première (312a) et deuxième (312b) parois latérales sensiblement orthogonales entre elles et sensiblement orthogonales au fond (312c), les première (312a) et deuxième (312b) parois latérales et le fond (312c) du microrenfoncement (311) se rejoignant en un même point (S) et formant un trièdre.

## Patentansprüche

1. Ein Verfahren zur Herstellung einer Primärform (320) zum Ausbilden eines retroreflektierenden Schirms (400), wobei das Verfahren die folgenden Schritte aufweist:
a) Ausbilden an der Vorderseite eines ersten Substrats (501), das eine Vorderseite und eine Rückseite aufweist, einer Schicht (503) aus einem Material derart, dass das erste Substrat (501) selektiv über der Schicht (503) ätzbar ist; und
b) Ausbilden von Mikrovertiefungen (311) von der Rückseite des ersten Substrats (501) durch selektives Ätzen des ersten Substrats (501) über der Schicht (503), wobei jede Mikrovertiefung (311) an der Rückseite der Schicht (503) entsteht und einen Boden (312c) besitzt, im Wesentlichen parallel zu der Vorderseite des ersten Substrats (501), und erste (312a) und zweite (312b) Seitenwände, im Wesentlichen orthogonal zueinander und zum des Boden (312c) sind, wobei sich die ersten (312a) und zweiten (312b) Seitenwände und der Boden (312c) der Mikrovertiefung an einem gleichen Punkt (S) treffen und ein Trieder ausbilden.

2. Verfahren nach Anspruch 1, das ferner vor Schritt a) einen Schritt des Ausbildens von Rauigkeit an der Vorderseite des ersten Substrats (501) aufweist.

3. Verfahren nach Anspruch 2, wobei der Schritt des Ausbildens von Rauigkeit an der Vorderseite des ersten Substrats (501) einen Schritt von Graustufen-Lithografie aufweist.

4. Verfahren nach einem der Ansprüche 1 bis 3, das ferner nach Schritt a) einen Schritt des Platzierens des ersten Substrats (501) an einem zweiten Trägersubstrat (505) aufweist, so dass die Vorderseite der Schicht (503) zu dem zweiten Substrat (505) weist.

5. Verfahren nach Anspruch 4, wobei die ersten (501) und zweiten (505) Substrate durch molekulares Bonding zusammengefügt werden.

6. Verfahren nach einem der Ansprüche 1 bis 5, das ferner zwischen Schritt a) und Schritt b) einen Schritt der Dickenreduzierung des ersten Substrats (501) von seiner Rückseite aufweist.

7. Verfahren nach einem der Ansprüche 1 bis 6, wobei bei Schritt b) die Mikrovertiefungen (311) durch Tiefen-reaktives-Ionenätzen ausgebildet werden.

8. Verfahren nach einem der Ansprüche 1 bis 7, wobei das erste Substrat (501) aus Silizium hergestellt ist und wobei die Schicht (503) aus Siliziumoxid hergestellt ist.

9. Verfahren nach einem der Ansprüche 1 bis 8, das ferner an der Rückseite des Substrats (501) einen Schritt des Ausbildens von Gräben (314) mit schiefen oder gebogenen Seiten aufweist, wobei sich jede Mikrovertiefung (311) in einen Graben (314) öffnet.

10. Verfahren zur Herstellung eines retroreflektierenden Schirms (400), das das Herstellen einer Primärform (320) durch das Verfahren nach einem der Ansprüche 1 bis 9 aufweist, und das Replizieren der Muster der Rückseite der Primärform (320) an einer Oberfläche eines Films (351) durch Formen von der Primärform (320).

11. Eine Primärform zum Ausbilden eines retroreflektierenden Schirms (400), die Folgendes aufweist:
ein erstes Substrat (501), das eine Vorderseite und eine Rückseite aufweist; eine Schicht (503) aus einem Material, derart dass das erste Substrat (501) selektiv ätzbar über der Schicht (503) ist, welche die Vorderseite des ersten Substrats (501) abdeckt; und
Mikrovertiefungen (311), die sich von der Rückseite des ersten Substrats (501) erstrecken, wobei sich jede Mikrovertiefung (311) an der Rückseite der Schicht (503) öffnet und einen Boden (312c) besitzt, im Wesentlichen parallel zu der Rückseite des ersten Substrats (501), und erste (312a) und zweite (312b) Seitenwände im Wesentlichen orthogonal zueinander und im Wesentlichen orthogonal zu dem Boden (312c) sind, wobei sich die ersten (312a) und zweiten (312b) Seitenwände und der Boden (312c) der Mikrovertiefung (311) an einem gleichen Punkt (S) treffen und ein Trieder ausbilden.

## Claims

1. A method of manufacturing a primary mold (320) for the forming of a retroreflective screen (400), the method comprising the steps of:
a) forming, on the front surface of a first substrate (501) comprising a front surface and a rear surface, a layer (503) of a material such that the first substrate (501) is selectively etchable over said layer (503); and
b) forming microrecesses (311) from the rear surface of the first substrate (501) by selective etching of the first substrate (501) over said layer (503), each microrecess (311) emerging on the rear surface of said layer (503) and having a back (312c) substantially parallel to the front surface of the first substrate (501) and first (312a) and second (312b) lateral walls substantially orthogonal to each other and substantially orthogonal to the back (312c), the first (312a) and second (312b) lateral walls and the back (312c) of the microrecess joining at a same point (S) and forming a trihedron.

2. The method of claim 1, further comprising, before step a), a step of forming roughnesses on the front surface of the first substrate (501).

3. The method of claim 2, wherein the step of forming roughnesses on the front surface of the first substrate (501) comprises a step of grey-level lithography.

4. The method of any of claims 1 to 3, further comprising, after step a), a step of placing the first substrate (501) on a second support substrate (505), so that the front surface of said layer (503) faces the second substrate (505).

5. The method of claim 4, wherein the first (501) and second (505) substrates are assembled by molecular bonding.

6. The method of any of claims 1 to 5, further comprising, between step a) and step b), a step of thinning the first substrate (501) from its rear surface.

7. The method of any of claims 1 to 6, wherein at step b), the microrecesses (311) are formed by deep reactive ion etching.

8. The method of any of claims 1 to 7, wherein the first substrate (501) is made of silicon and wherein said layer (503) is made of silicon oxide.

9. The method of any of claims 1 to 8, further comprising a step of forming, on the rear surface side of the substrate (501), trenches (314) with oblique or curved sides, each microrecess (311) emerging into a trench (314).

10. A method of manufacturing a retroreflective screen (400), comprising manufacturing a primary mold (320) by the method of any of claims 1 to 9, and replicating the patterns of the rear surface of the primary mold (320) on a surface of a film (351), by molding from the primary mold (320).

11. A primary mold for the forming of a retroreflective screen (400), comprising:
a first substrate (501) comprising a front surface and a rear surface;
a layer (503) of a material such that the first substrate (501) is selectively etchable over said layer (503), coating the front surface of the first substrate (501); and
microrecesses (311) extending from the rear surface of the first substrate (501), each microrecess (311) emerging on the rear surface of said layer (503) and having a back (312c) substantially parallel to the rear surface of the first substrate (501) and first (312a) and second (312b) lateral walls substantially orthogonal to each other and substantially orthogonal to the back (312c), the first (312a) and second (312b) lateral walls and the back (312c) of the microrecess (311) joining at a same point (S) and forming a trihedron.
